# EUROPÄISCHE PATENTSCHRIFT

(11) **EP 2 108 836 B1**
(45) Veröffentlichungstag und Bekanntmachung des Hinweises auf die Patenterteilung: **28.05.2014**
(21) Anmeldenummer: 08021423.2
(22) Anmeldetag: 10.12.2008
(51) Int. Cl.: F03D 11/04, F03D 1/00

(54) **Verankerung eines Turms einer Windenergieanlage**
Anchoring a tower of a wind energy device
Ancrage d'une tour d'une éolienne

(30) Priorität: 12.12.2007 DE 102007060379
(43) Veröffentlichungstag der Anmeldung: 14.10.2009
(73) Patentinhaber: Senvion SE, 22297 Hamburg (DE)
(72) Erfinder: Frost, Bernd, 25551 Winseldorf (DE)
(74) Vertreter: Grebner, Christian Georg Rudolf

(56) Entgegenhaltungen:
- WO-A1-03/031733
- DE-A1- 19 901 510
- FR-A1- 2 692 611
- JP-A- 2000 283 019
- US-A1- 2004 131 428

## Beschreibung

Die Erfindung betrifft einen Verbindungskörper einer Windenergieanlage, der zwischen der Unterseite eines Turms einer Windenergieanlage und einem Fundamentkörper oder der zwischen der Unterseite eines Turms einer Windenergieanlage und einem Betonturm, insbesondere Stahlbetonturm, angeordnet ist oder wird oder anordbar ist. Darüber hinaus betrifft die Erfindung eine Verwendung eines Verbindungskörpers zur Errichtung eines Turms einer Windenergieanlage sowie eine Anordnung eines Verbindungskörpers zwischen der Unterseite eines Turms einer Windenergieanlage und einen Fundamentkörper. Ferner betrifft die Erfindung ein Verfahren zum Errichten eines Turms einer Windenergieanlage sowie eine Windenergieanlage mit einem Turm.

Windenergieanlagen der Patentanmelderin sind unter der Bezeichnung 5M, MM92, MM82, MM70 sowie MD77 bekannt.

Um einen Turm einer Windenergieanlage aufzustellen, ist es bekannt, den Turm der Windenergieanlage auf einem Fundament aus Beton auf einem Untergrund anzuordnen, wobei das Fundament mit Verbindungselementen ausgebildet ist, um den Fußflansch des Turms darauf aufzusetzen und zu befestigen. Insbesondere wird das Fundament des Turms von der Größe der Anlage und von den vorherrschenden Bodenverhältnissen bestimmt. Die Befestigung der Türme von Windenergieanlagen erfolgt in der Regel über einen in Beton vergossenen Ankerring, an dem Verbindungselemente, insbesondere Spannanker, angeordnet sind. Hierbei wird der Turmflansch auf die aus dem Betonfundament herausragenden Verbindungselemente angeordnet.

Typischerweise sind für die Fundamente für Windenergieanlagen vornehmlich stahlbewerte Betonfundamente vorgesehen, die vor Ort erstellt werden. In der Regel wird hierbei Beton der Festigkeitsklasse B 25 oder B 35 verwendet.

In JP-A-2000-283019 ist ein Stützturm für eine Windkraftanlage aus Beton offenbart. Hierbei werden auf einem Betonfundament nach oben ragende Stahlteile angeordnet, so dass bei Platzierung eines zylindrischen Segments aus Beton die Stahlteile das zylindrische Segment durchdringen.

Darüber hinaus ist im Dokument DE-A-199 01 510 ein Fundament für oberirdische Türme, beispielsweise von Windkraftanlagen, offenbart. Hierbei weist das Fundament ein Fundamentelement auf, an welchem das untere Ende bzw. der Fuß eines Turms befestigbar ist. Die Fundamentplatte liegt dabei auf einem vorgefertigten Bereich des Untergrunds auf, wobei die Fundamentplatte mit Hilfe von im Untergrund angeordneten Zugankern und Spannbolzen vorgespannt oder vorspannbar ist.

Außerdem offenbart WO-A-03/031733 ein Verfahren zur Erstellung eines Fundaments für einen Turm einer Windenergieanlage. Hierbei verfügt der Turm einer Windenergieanlage über mehrere Turmsegmente, wobei das unterste Segment, das so genannte Fundamentsegment, in ein Fundament eingebettet ist. Die Segmente des Turms sowie das Fundamentsegment sind üblicherweise Stahlelemente, können jedoch auch Spannbetonelemente sein, in die beispielsweise Spannstahlelemente bzw. Anker eingegossen sind. Das Fundamentsegment wird gemäß der technischen Lehre in eine Fundamentplatte aus Beton eingegossen.

Ferner offenbart US-A-2004/0131428 ein stapelförmiges Ankerfundament für schwere Lasten, das einen Betonfundamentdeckel aufweist.

Darüber hinaus ist aus DE-A-10 2004 017 008 ein Verfahren zum Errichten eines Turms einer Windenergieanlage bekannt, wobei auf einem Fundament eine ringförmige Schalung erstellt und mit einer dünnflüssigen Vergussmasse befüllt wird. Nach Abbinden der Vergussmasse und Entfernen der Schalung wird ein Nivellierring auf der Oberfläche der abgebundenen Vergussmasse platziert und ein Turmsegment auf dem Ring aufgestellt und damit verbunden. Die verwendeten Nivellierringe müssen präzise und individuell gefertigt sein und sind auf Grund ihrer Größe sehr aufwändig herzustellen, wodurch sich besonders lange Lieferzeiten von mehreren Monaten ergeben.

Ausgehend von diesem Stand der Technik besteht die Aufgabe der Erfindung darin, die Errichtung eines Turms einer Windenergieanlage zu verbessern, wobei der Aufwand am Aufstellungsort des Turms möglichst gering gehalten werden soll, wobei es möglich sein soll, dass der, insbesondere zeitliche, Einsatz von Kränen oder dergleichen effektiver sein soll.

Die Aufgabe wird gelöst durch einen Verbindungskörper einer Windenergieanlage, der zwischen der Unterseite eines Turms einer Windenergieanlage und einem Fundamentkörper oder der zwischen der Unterseite eines Turms einer Windenergieanlage und einem Betonturm, insbesondere Stahlbetonturm, angeordnet ist oder wird oder anordbar ist, wobei der Verbindungskörper in Form eines Fertigbetonteils mit einer oberen Kontaktfläche zum Turm und einer unteren Kontaktfläche zum Fundamentkörper ausgeführt ist, wobei die untere Kontaktfläche des Verbindungskörpers zum Fundamentkörper oder die untere Kontaktfläche des Verbindungskörpers zum Betonturm größer ist als die obere Kontaktfläche des Verbindungskörpers zum Turm bzw. zum Fußflansch oder zum Strahlturm..

Dadurch, dass ein vorgefertigtes Betonteil aus Beton als vorgefertigtes und verbaufertiges Teil auf dem Fundament oder auf der Oberseite eines Betonturms eines Hybridturms als Verbindungskörper bereitgestellt und angeordnet wird, wird ein schneller und zügiger Aufbau einer Windenergieanlage bzw. eines Turms einer Windenergieanlage ermöglicht. Hierzu wird beispielsweise das Fertigbetonteil in einem Betonwerk gefertigt und als Fertigteil am Aufstellungsort des Turms der Windenergieanlage ohne weitere Wartezeit auf dem Fundamentkörper oder auf den Spannankern oder auf der Oberseite des errichteten Betonturms platziert und ausgerichtet. Insbesondere wird damit der Errichtungsort für eine Windenergieanlage vorbereitet, wobei es in der Vorbereitung der Errichtungsstelle bis zum Aufstellen eines Turms erfindungsgemäß nicht notwendig ist, Kräne oder andere kostenintensive Gerätschaften vor Ort bereitzustellen oder bereit zu halten. Erst nachdem die Errichtungsstelle mit dem Fundament und dem darauf angeordneten Verbindungskörper fertig gestellt ist, müssen zur Turmerrichtung die Kräne vor Ort sein. Damit wird ein effektiver zeitlicher Einsatz der teuren Geräte erreicht.

Insbesondere ist das Betonfertigteil aus einem Beton höherer Güte als das Material bzw. der Beton des Fundaments, auf dem das Fertigbetonteil angeordnet wird, ausgebildet. Durch die Verwendung eines vorgefertigten Betonteils als Verbindungskörper wird die Errichtungszeit verkürzt, da nach Anordnung des Fertigbetonteils der Turmfuß bzw. der Fußflansch des Turms ohne weitere Verzögerung wie Ausrichtung oder Aushärtung einer Vergussmasse auf dem Verbindungskörper aufgesetzt werden kann. Dabei verfügt vorteilhafterweise das Fundament über Verbindungselemente, die aus der Fundamentoberfläche herausragen und durch entsprechende Bohrungen im Verbindungskörper hindurchragen, um die Löcher des Fußflansches des Turms zu durchdringen. Anschließend werden Schrauben auf die Verbindungselemente auf der Seite des Turmfußflansches aufgesetzt und mit einer vorbestimmten Kraft angezogen.

Hierbei ist insbesondere das Fertigbetonteil aus einem hochfesten Beton hergestellt, so dass eine aus der Vorspannung resultierende hohe Flächenpressung des Turmfußflansches so verteilt wird, dass im Fundament die zulässige Flächenpressung nicht überschritten wird. Dazu ist insbesondere das Fertigbetonteil aus einem höherwertigen und/oder festeren Beton als der Fundamentkörper oder der Betonturm hergestellt.

Bevorzugterweise ist das Fertigbetonteil als geschlossener Ring oder als polygonales Bauteil hergestellt, wobei in einer weiteren bevorzugten Ausführungsform der Verbindungskörper aus mehreren Fertigbetonteilen segmentartig zusammengesetzt wird. Insbesondere wird als Ausgangsmaterial für das Fertigbetonteil hochfester Beton verwendet, wobei ein derartiger Beton eine Druckfestigkeit von über 60 N/mm² aufweist.

Dadurch, dass die Fertigbetonteile über eine obere plane Oberfläche verfügen, d.h. über eine Oberfläche ohne Imperfektion, ist es bei der Verwendung eines erfindungsgemäßen Verbindungskörpers nicht mehr erforderlich, entsprechende Lastverteilbleche oder dergleichen bei der Errichtung eines Turms einer Windenergieanlage zu verwenden.

Darüber hinaus ist im Rahmen der Erfindung vorgesehen, dass der Verbindungkörper bei der Errichtung von Windenergieanlagen, die sogenannte Hybridtürme aufweisen, verwendet wird. Hybridtürme verfügen dabei über ein, vorzugsweise auf einem Fundament errichteten, Turmunterteil aus Beton, insbesondere aus Stahlbeton, als Betonturm und über ein oberes Turmteil aus Stahl. Bei Hybrid-Türmen gemäß dem Stand der Technik sind dabei die oberen Stahltürme auf der Oberseite des unteren Betonturms mittels Flanschverbindungen aufgeflanscht.

Gemäß der Erfindung werden der oder die Verbindungskörper auf der Oberseite des Betonturms bzw. auf der oberseitigen Turmwandung des, im Querschnitt ringförmigen, Betonturms angeordnet, wobei auf der Oberseite des oder der Verbindungskörper der Turmfußflansch des Stahlrohrturms aufgesetzt wird oder ist. Im Übergangsbereich zwischen dem unteren Betonturm bzw. Betonschaft und dem oberen Stahlturm bzw. Stahlschaft ist dabei die Unterseite des Verbindungskörpers auf der Oberseite des Betonturms bzw. der Betonturmwandung platziert und gleichzeitig ist die Oberseite des oder der Verbindungskörper im Kontakt mit dem darauf positionierten Stahlturm bzw. Stahlschaft. Bevorzugterweise ist die, vorzugsweise untere d.h. die dem Betonturm zugewandte, Breite des oder der Verbindungskörper (im Querschnitt) kleiner als der Durchmesser der Turmwandung des Betonturms, so dass der oder die Verbindungskörper sicher auf der Oberseite des Betonturms positioniert und ausgerichtet werden können.

Bei der Errichtung eines Hybridturms einer Windenergieanlage unter Verwendung des oder der erfindungsgemäßen Verbindungskörper als Fertigbetonteile gelten die Ausführungen zu der beschriebenen Anordnung des oder der Verbindungskörper auf einem Fundamentkörper in entsprechender Weise, so dass die Ausführungen hierzu auch auf die Anordnung des oder der Verbindungskörper auf dem Betonturm eines Hybridturms anwendbar sind.

Durch die beiden letztgenannten Maßnahmen wird die durch die Vorspannung verursachte hohe Flächenpressung des Turmfußflansches kraftflussgerecht und sehr gleichmäßig in das Fundament oder in den Bohrturm übertragen. Hierbei wird durch die zum Fundamentkörper oder Betonturm hin vergrößerte Kontaktfläche berücksichtigt, dass der Beton des Fundaments oder des Betonturms nur weitaus geringere Flächenpressungen aufnehmen kann als der, bevorzugt aus Stahl ausgeführte, Turmfußflansch bzw. Stahlturm. Der Werkstoff des Betonfertigteils muss so gewählt werden, dass die hohen Flächenpressungen des Turms aufgenommen werden, also deutlich höherwertiger als das Fundament oder der Betonturm. Um einer unzulässigen Belastungsspitze durch Imperfektionen im Turmfußflansch (z.B. Welligkeit) vorzubeugen, ist das Betonfertigteil mit einer ausreichenden Sicherheitsreserve zu bemessen.

Bevorzugt ist die untere Kontaktfläche mindestens um einen Faktor 1,1 größer, insbesondere größer als 1,3, besonders bevorzugt größer als 1,5, als die obere Kontaktfläche.

Darüber hinaus wird eine gute Lastverteilung dadurch erreicht, dass der Verbindungskörper von der Unterseite zur Oberseite nach oben verjüngend ausgebildet ist. Hierdurch wird beispielsweise der Verbindungskörper im Querschnitt konusförmig oder kegelstumpfartig ausgebildet. Somit wird auch eine im Vergleich zu einem flachen Stahlring bessere Lastverteilung erreicht, da die konusförmige oder kegelstumpfartige bzw. sich verjüngende Geometrie (im Querschnitt) des Verbindungskörpers entsprechend dem Kraftfluss angepasst ist.

Außerdem zeichnet sich der Verbindungskörper dadurch aus, dass der Verbindungskörper an der dem Fundamentkörper oder an der dem Betonturm zugewandten Unterseite uneben ausgebildet ist. Hierbei kann die Unterseite des Verbindungskörpers beispielsweise im Querschnitt unterseitige Diskontinuitäten wie z.B. eine Kante oder einen Hohlraum aufweisen.

Insbesondere ist die Unterseite, die dem Fundamentkörper oder dem Betonturm zugewandt ist, in Bezug auf die Horizontale mit einer vorbestimmten Neigung ungleich 0° (null Grad), insbesondere bei Anordnung auf dem Fundamentkörper oder bei Anordnung auf dem Betonturm, ausgebildet.

Bevorzugterweise ist die dem Fundamentkörper oder dem Betonturm zugewandte Unterseite des Verbindungskörpers im Querschnitt nach unten verjüngend, insbesondere konisch zulaufend, ausgebildet.

Gemäß einer weiteren Ausgestaltung des Verbindungskörpers ist vorgesehen, dass der Verbindungskörper an der Unterseite eine Ausnehmung zur Ausbildung eines Zwischenraums oder Hohlraums aufweist. Dadurch wird ein Fertigbetonteil aus hochfestem Beton verwendet, an dessen Unterseite eine konkave Wölbung oder Ausformung vorgesehen ist, die mit einer entsprechenden Vergussmasse befüllt wird. Durch die gewölbeartige Ausformung werden bei Einfüllen eines Vergussmittels oder dergleichen zudem Luftblasen in den entstehenden Hohlraum bei Anordnung des Verbindungskörpers auf einem ebenen Fundament oder auf einem Betonturm vermieden. Durch die konkave Ausnehmung an der Unterseite des Verbindungskörpers wird zudem eine sichere Verteilung der Vergussmasse, z.B. Fließmörtel, gewährleistet.

Eine günstige Ausführungsform des Verbindungskörpers ergibt sich dadurch, dass die Ausnehmung an der Unterseite gewölbeförmig und/oder konkav ausgebildet ist.

Insbesondere weist der Verbindungskörper neben den Bohrungen für die Verbindungselemente, z.B. Spannanker eines Ankerkorbs, wenigstens eine Bohrung auf, so dass der Hohlraum oder der Zwischenraum mit der Außenseite des Verbindungskörpers in Verbindung steht. Hierdurch wird es möglich, dass nach Anordnung des Verbindungskörpers auf einem Fundament oder einem Betonturm über die ausgebildete Bohrung bzw. Bohrungen eine Vergussmasse in den Hohlraum zwischen der Unterseite des Verbindungskörpers und der Oberfläche des Fundaments oder der Oberfläche des Betonturms eingebracht wird. Darüber hinaus verfügt der erfindungsgemäße Verbindungskörper über Bohrungen bzw. Löcher, so dass bei Anordnung des Fertigbetonteils aus der Fundamentoberfläche oder der Betonturmoberseite herausragende Verbindungselemente, beispielsweise Spannanker, Schrauben, Bolzen oder dergleichen, diese Bohrungen bzw. Löcher durchdringen.

Weiterhin ist gemäß einer bevorzugten Ausführungsform vorgesehen, dass die Ausnehmung nach oben zu den Bohrungen hin verjüngend ausgebildet ist.

Insbesondere wird oder ist durch die wenigstens eine Bohrung eine Vergussmasse in den Hohlraum oder Zwischenraum zwischen der Unterseite des Verbindungskörpers und der Fundamentoberfläche oder der Betonturmoberseite bzw. Betonturmoberfläche eingebracht. Weiterhin ist es von Vorteil, wenn wenigstens eine weitere Bohrung am Verbindungskörper vorgesehen ist, so dass der Hohlraum oder der Zwischenraum während des Einbringens der Vergussmasse entlüftet wird.

Ferner zeichnet sich der Verbindungskörper dadurch aus, dass an der Unterseite des Verbindungskörpers eine oder mehrere Dichtungen vorgesehen sind, wodurch die Unterseite kreisringförmig innen und/oder außen, beispielsweise durch elastische Dichtungsbänder, abgedichtet wird. Hierbei haben die vorgesehenen Dichtungen die Funktion, dass bei Ausbildung einer Ausnehmung an der Unterseite des Verbindungskörpers und nach Einbringen einer Vergussmasse in den Hohlraum die Dichtungen als eine Art Schalung für die Fließmasse verwendet werden. Außerdem wird ein dauerhafter Abschluss zwischen dem ausgebildeten Hohlraum bzw. dem vergossenen Hohlraum und der Außenseite des Turms erreicht.

Überdies ist in einer Ausgestaltung vorgesehen, dass eine Dichtung an der außenliegenden Unterseite des Verbindungskörpers und/oder eine Dichtung an der innenliegenden Unterseite des Verbindungskörpers vorgesehen sind.

Bevorzugterweise ist der Verbindungskörper als geschlossener, vorzugsweise kreisförmiger oder polygonaler Ring ausgebildet.

Überdies ist es in einer weiteren Ausführungsform möglich, dass der Verbindungskörper aus mehreren Verbindungskörpersegmenten, die als Fertigbetonteile zu dem Errichtungsort transportiert werden, ausgebildet ist, so dass die Verbindungskörpersegmente bei Platzierung auf dem Fundament oder auf dem Betonturm einen geschlossenen Ring bilden.

Vorteilhafterweise ist oder wird der Verbindungskörper zwischen der Unterseite, insbesondere dem Turmflansch, weiter vorzugsweise dem Stahlflansch eines Turms, insbesondere eines Stahlturms, einer Windenergieanlage und dem Fundamentkörper bzw. bei Errichtung eines Hybridturms zwischen dem unteren Betonturm, insbesondere Stahlbetonturm, und dem oberen Stahlrohrturm angeordnet bzw. ist dazwischen anordbar.

Zudem ist es vorteilhaft, wenn der Verbindungskörper bei Anordnung auf dem Fundamentkörper oder dem Betonturm mittels Spannelementen, insbesondere von Spannankern, vorgespannt wird oder ist, so dass der Verbindungskörper mit einer extern aufgebrachten Vorspannkraft auf dem Fundamentkörper oder dem Betonturm angeordnet ist oder wird.

Darüber hinaus wird die Aufgabe gelöst durch die Verwendung eines Verbindungskörpers zur Errichtung eines Turms einer Windenergieanlage, wobei der Verbindungskörper wie voranstehend beschrieben ausgebildet ist.

Des Weiteren wird die Aufgabe gelöst durch die Anordnung eines Verbindungskörpers zwischen der Unterseite eines Turms einer Windenergieanlage und einem Fundamentkörper oder einem Betonturm, wobei der Verbindungskörper wie voranstehend beschrieben ausgebildet ist. Zur Vermeidung von Wiederholungen wird auf die obigen Ausführungen entsprechend verwiesen.

Außerdem wird die Aufgabe gelöst durch ein Verfahren zum Errichten eines Turms einer Windenergieanlage, wobei nach Anordnung eines erfindungsgemäßen Verbindungskörpers auf einem Fundamentkörper oder auf einem Betonturm, insbesondere Stahlbetonturm, in einem weiteren nachfolgenden Schritt ein Turm oder ein Turmteil bzw. ein Turmflansch auf dem Verbindungskörper angeordnet wird.

Hierzu ist weiter vorgesehen, dass bei Anordnung des Verbindungskörpers auf einem Fundamentkörper oder auf einem Betonturm zwischen der Unterseite des Verbindungskörpers und dem Fundamentkörper oder dem Betonturm ein Hohlraum ausgebildet wird und in einem nachfolgenden Schritt eine Vergussmasse in den Hohlraum eingebracht wird, wobei insbesondere vor Einbringen der Vergussmasse der Verbindungskörper, insbesondere durch Justierung von auf Verankerungselementen vorgesehenen Justierungselementen, ausgerichtet wird. Hierbei wird der Verbindungskörper als Fertigbetonteil bzw. die als Fertigbetonteile hergestellten Verbindungskörpersegmente, beispielsweise durch Stellschrauben oder entsprechende Keile, auf dem Fundament bzw. dem Fundamentkörper oder auf der Oberseite des Betonturms justiert.

Bevorzugterweise erfolgt das Einbringen von Vergussmasse in den ausgebildeten Hohlraum durch wenigstens ein oder mehrere Löcher oder Bohrungen des Verbindungskörpers.

Eine alternative Lösung der Aufgabe besteht in einem Verfahren zum Errichten eines Turms einer Windenergieanlage, wobei die folgenden Schritte ausgeführt werden:
- Anordnung und/oder Ausrichtung von Verankerungselementen an einem Errichtungsort einer Windenenergieanlage
- Anordnung und/oder Positionierung, insbesondere Justage, wenigstens eines oder mehrerer Verbindungskörper auf oder an Verankerungselementen und
- Gießen eines Fundamentkörpers zu einem vollständigen Fundamentkörper, wobei die Gießmasse des Fundamentkörpers, insbesondere Beton, wenigstens bis an die Unterseite des oder der Verbindungskörper angegossen wird, wobei
- in einem weiteren nachfolgenden Schritt ein Turm einer Windenergieanlage auf dem Verbindungskörper angeordnet wird.

Durch die Verwendung eines an der Unterseite konisch ausgebildeten Verbindungskörpers wird es bei der Ausführung des Verfahrens möglich, dass zunächst die Verbindungskörper auf Verankerungselemente ausgerichtet werden, wodurch ein geschlossener Ring mit Verbindungskörpern auf den Verankerungselementen positioniert wird. Anschließend wird der Fundamentkörper unterhalb des Verbindungskörpers durch Gießen von Beton ausgebildet, wozu beispielsweise Beton als Gießmasse in den Raum unterhalb des Verbindungskörpers eingebracht wird, wobei der Beton wenigstens bis an die Unterseite des Verbindungskörpers angegossen wird. Durch die nach unten gerichtete konische Form des Verbindungskörpers im Querschnitt wird erreicht, dass an der konisch ausgebildeten Unterseite des Verbindungskörpers Lufteinschlüsse auf einfache Weise verhindert werden.

In einer Weiterbildung zeichnet sich das alternative Verfahren dadurch aus, dass nach Anordnung und/oder Ausrichtung von Verankerungselementen an einem Errichtungsort einer Windenenergieanlage zunächst ein erster, unterer Teil des Fundamentkörpers hergestellt, insbesondere gegossen, wird, so dass die Verankerungselemente im teilweise ausgebildeten Fundamentkörper angeordnet sind, und nach Anordnung und/oder Positionierung, insbesondere Justage, wenigstens eines oder mehrerer Verbindungskörper auf oder an Verankerungselementen ein weiterer Teil des Fundamentkörpers zu einem vollständigen Fundamentkörper ausgebildet, insbesondere gegossen, wird.

Hierdurch ist es möglich, dass zuerst ein erster unterer Teil des Fundamentkörpers hergestellt wird, wobei hierbei die Verankerungselemente, auf denen der Verbindungskörper angeordnet wird, aus dem teilweisen Fundamentkörper bzw. Fundamentteilkörper herausragen, so dass unterhalb des Verbindungskörpers nach Anordnung ein befüllbarer Raum für den Fundamentkörper vorhanden ist, der anschließend durch Einbringen einer weiteren Gießmasse oder Gussmasse, insbesondere Beton, zu einem vollständigen Fundamentkörper aufgefüllt wird. Nach Abbinden des Betons wird ein Turm einer Windenergieanlage auf dem Verbindungskörper und dem Fundamentkörper errichtet.

Darüber hinaus wird die Aufgabe gelöst durch die Kombination eines voranstehend beschriebenen Verbindungskörpers, insbesondere eines Verbindungskörpers einer Windenergieanlage, der zwischen der Unterseite eines Turms einer Windenergieanlage, mit einem Fundamentkörper oder mit einem Betonturm, insbesondere Stahlbetonturm, auf dem oder denen der Verbindungskörper angeordnet ist oder wird oder anordbar ist, und/oder mit einem Turm.

In einer Weiterbildung ist vorgesehen, dass zwischen der Oberfläche der Unterseite des Verbindungskörpers der Fundamentkörperoberfläche oder der Oberseite des Betonturms eine Kavität, vorzugsweise mit einer in der Kavität ausgebildeten oder angeordneten Masse oder Flüssigkeit ausgebildet ist oder wird. Hierbei wird eine entsprechende Vergussmasse, die nach Einbringen aushärtet, in die Kavität bzw. den Hohlraum eingebracht.

Ferner wird die Aufgabe gelöst durch eine Windenergieanlage mit einem Turm und mit einem voranstehend beschriebenen erfindungsgemäßen Verbindungskörper oder einer voranstehend beschriebenen Kombination eines Verbindungskörpers mit einem Fundamentkörper und/oder Turm. Zur Vermeidung von Wiederholungen wird auf die voranstehenden Ausführungen zum Verbindungskörper ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen. Die Erfindung wird nachstehend ohne Beschränkung des allgemeinen Erfindungsgedankens anhand von Ausführungsbeispielen in den nachfolgenden Figuren exemplarisch beschrieben, wobei bezüglich aller im Text nicht näher erläuterten Einzelheiten ausdrücklich auf die Zeichnungen verwiesen wird. Es zeigen:
- Fig. 1: eine schematische Querschnittsansicht eines Abschnitts eines Turmfußes einer Windenergieanlage,
- Fig. 2 a, 2b: jeweils eine Detailansicht des Turmfußflansches aus Fig. 1 und
- Fig. 3: eine weitere Ausführungsform eines erfindungsgemäßen Verbindungskörpers, der unterhalb eines Turmflansches zwischen dem Turmflansch und dem Fundamentkörper angeordnet ist.

In den folgenden Figuren sind jeweils gleiche oder gleichartige Elemente und/oder Teile mit denselben Bezugsziffern versehen, so dass von einer erneuten Vorstellung jeweils abgesehen wird.

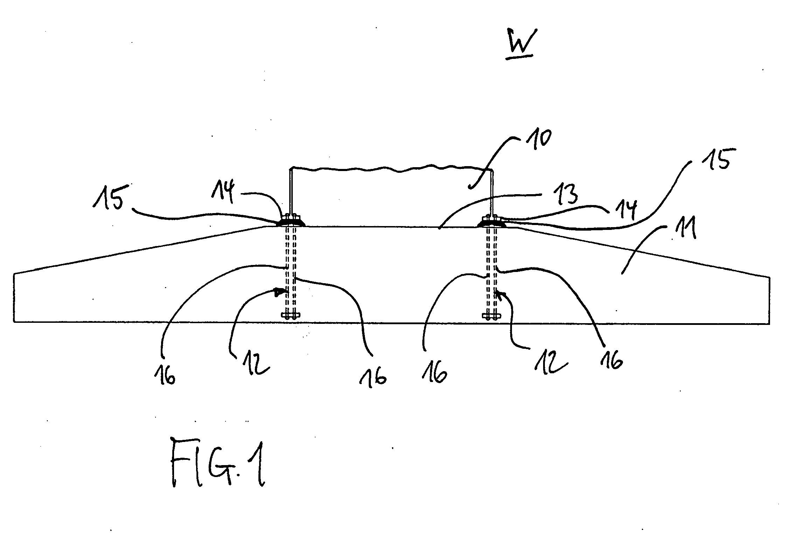

Fig. 1 zeigt eine schematische Schnittansicht eines Fußteils einer Windenergieanlage, die in Fig. 1 mit W bezeichnet ist. Die Windenergieanlage W verfügt über einen Turm 10, auf dem eine Gondel oder ein Maschinengehäuse drehbar angeordnet ist. Ferner verfügt die Windenergieanlage W über wenigstens ein an dem Gehäuse oder der Maschinengondel durch Windbewegung bewegbares bzw. rotierbares Rotorblatt. Vorzugsweise verfügt die Windenergieanlage W über drei gleichmäßig angeordnete und durch Windbewegung rotierend angetriebene Rotorblätter.

Die Windenergieanlage W verfügt über einen Turm 10, insbesondere einen Stahlturm, der mittels vorgespannter Verbindungsmittel auf einem Fundament 11 angeordnet ist. Das Fundament 11 kann selbst als Fertigteilfundament oder auch als Ortbeton-Fundament oder Transportbeton-Fundament ausgeführt sein. Das Fundament 11 ist auf einem oder in einem entsprechenden Untergrund bzw. Boden platziert.

Im Inneren des Fundaments 11 ist ein Ankerkorb 12 mit entsprechenden Spannankern 16 als Verankerungselemente eingebracht und nach Aushärtung des Betons des Fundaments 11 fixiert. Vorzugsweise ist der Ankerkorb 12 kreisrund bzw. umlaufend ausgebildet. Das Fundament 11 ist nach oben hin verjüngend ausgebildet und weist an seiner Oberfläche eine im Wesentlichen plane Fläche 13 auf. Der Turm 10 der Windenergieanlage W verfügt über ein unteres Turmteil, das an seiner Unterseite einen Turmfußflansch 14 aufweist.

Zwischen der Unterseite des Turmfußflansches 14 und der planen Fläche 13 des Fundaments 11 ist ein Fertigbetonteil 15 angeordnet, das von den Spannankern 16 des Ankerkorbs 12 durchdrungen wird und an deren Oberseite Muttern 17 am Turmfußflansch 14 vorgesehen sind, so dass der Turmfußflansch 14 fest mit dem Fundament 11 verbunden wird.

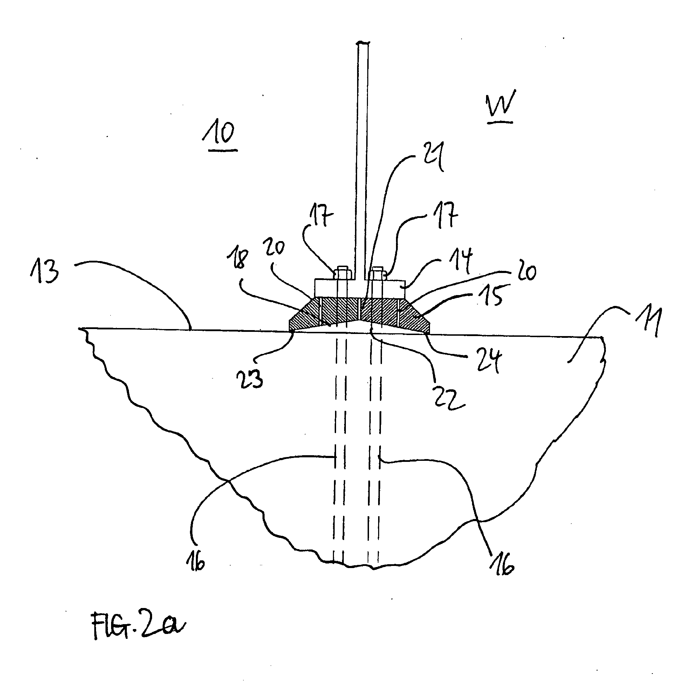

Fig. 2a zeigt in einer Detailansicht die Verbindung des Turmfußflansches 14 mittels der Spannanker 16 auf dem Fundament 11 im Detail. Hierbei ist das Fertigbetonteil 15 als Lastverteilelement ausgeführt, wobei die fundamentseitige Kontaktfläche des Fertigbetonteils 15 größer als die turmseitige Kontaktfläche ist. Hierbei hat das Fertigbetonteil 15 eine Funktion eines Verbindungskörpers zwischen der Unterseite des Turms 10 und dem Fundament 11.

Darüber hinaus wird durch das Fertigbetonteil 15 erreicht, dass die Verteilung von Belastungen aus dem Turmfußflansch 14 auf eine ausreichend große Fläche verteilt wird, da das Fertigbetonteil 15 von unten nach oben verjüngend ausgebildet ist. Insbesondere ist das Fertigbetonteil 15 aus einem höherwertigen Beton als das Fundament 11 gefertigt.

Insbesondere verfügt das Fertigbetonteil 15 auf seiner Unterseite über eine konkave Mulde 18, so dass bei Anordnung des Fertigbetonteils 15 auf der im Wesentlichen planen Oberfläche 13 zwischen der Unterseite des Fertigbetonteils 15 und der planen Fläche 13 ein Hohlraum 22 ausgebildet ist bzw. entsteht.

Weiterhin verfügt das Fertigbetonteil 15 über Bohrungen, so dass die Spannanker 16 das Fertigbetonteil 15 durchdringen, um eine Befestigung des Turms 10 durch Verspannen von Turmfußflansch 14, Fertigbetonteil 15 und Fundament 11 zu erreichen. Außerdem sind neben den Bohrungen für die Spannanker 16 im Fertigbetonteil 15 auch weitere Bohrungen 20 im Fertigbetonteil vorgesehen, so dass über diese Bohrungen 20 ein fließfähiger Mörtel, insbesondere aus höherwertigem Beton gegenüber dem Beton des Fundamtens 11, über die Bohrungen 20 in den ausgebildeten Hohlraum 22 zwischen der Mulde 18 und der planen Oberfläche 13 eingebracht wird.

Überdies ist im Fertigbetonteil 15 in der Mitte eine weitere Bohrung 21 ausgebildet, wodurch bei Befüllung des Hohlraums 22 zwischen der Unterseite des Fertigbetonteils 15 und dem Fundament 11 Luft über die (Entlüftungs-)Bohrung 21 entweichen kann. Hierdurch werden die Bohrungen 20 zum Befüllen des Hohlraums 22 mit einer Vergussmasse und die Bohrung 21 zur Entlüftung des Hohlraums 22 bei Befüllung des Hohlraums 22 genutzt.

Die Bohrungen 20 und 21 sind bevorzugt über den gesamten Umfang des Verbindungskörpers verteilt, z.B. in Abständen von etwa 0,5 bis 2 Meter, insbesondere etwa 1 Meter, so dass sich, auch abhängig von der Turmgröße und einer eventuellen Segmentierung des Verbindungskörpers, 8 bis 40, bevorzugt 10 bis 20 Befülllöcher für einen Ring ergeben.

Eine bevorzugte Befüllung des ausgebildeten Hohlraums 22 zwischen der Unterseite des Fertigbetonteils 15 und den Fundament 11 besteht in der Verwendung eines Spezialbetons wie z.B. Pagel^{®}-Beton.

Um eine Vergussmasse in den ausgebildeten Hohlraum 22 an der Unterseite des Fertigbetonteils 15 einzubringen, verfügt weiterhin das Fertigbetonteil 15 an der Unterseite über Dichtungen 23, 24 bzw. Dichtungsringe an der Innen- und Außenseite des Turms 10. Dadurch wird vor Einbringen der Vergussmasse der Hohlraum 22 durch die elastischen Dichtungen 23, 24 seitlich abgedichtet. Darüber hinaus kann in einer Ausgestaltung an der Errichtungsstelle durch Anspachteln oder Verfüllen mit einer elastischen Masse eine Dichtung an der Außen- und/oder Innenseite der Windenergieanlage W erzielt werden.

Das Fertigbetonteil 15 kann sowohl als komplettes kreisförmiges oder polygonales Fertigbauteil in sich geschlossen angefertigt und zum Errichtungsort transportiert werden. Ist der Durchmesser des Turms 10 der Windenergieanlage W so groß, dass mehrere Teile aufgrund von Transport zerlegt werden müssen, ist in einer Weiterbildung vorgesehen, dass mehrere kreissegmentförmige Fertigbetonteile hergestellt werden und zum Errichtungsort transportiert werden. Hierdurch ergibt sich ein leichterer Transport der Fertigbetonteile 15.

Besonders bevorzugt werden gerade Fertigbetonteile 15 zu einem Polygon-Ring zur Ausbildung eines Verbindungskörpers zwischen dem aus Stahl hergestellten Turmflansch 14 und dem Fundament 11 zusammengesetzt, wobei die Herstellung und der Transport derartiger Betonteile besonders einfach sind.

Am Errichtungsort der Windenergieanlage W werden die segmentförmigen Fertigbetonteile 15 zu einem Polygon bzw. zu einem geschlossenen Kreis oder Ring angeordnet. Hierbei wird das Fertigbetonteil 15 bzw. werden die Fertigbetonteile auf die Oberseite des Fundaments 11 aufgesetzt und anschließend das oder die Fertigbetonteil(e) 15 auf dem Fundament 11 ausgerichtet. Im Anschluss daran wird eine Vergussmasse in den Hohlraum 22 zwischen dem Fertigbetonteil bzw. den Fertigbetonteilen 15 und dem Fundament 11 eingebracht, so dass anschließend der Turm 10 der Windenergieanlage W auf dem Fertigbetonteil 15 aufgesetzt und montiert wird. Bevorzugterweise werden das Fertigbetonteil 15 oder die Fertigbetonteilsegmente durch Justierung von auf den Spannankern 16 aufgeschraubten Muttern, Kunststoffmuttern oder dergleichen ausgerichtet.

Außerdem kann in einer weiteren Ausgestaltung der Fertigbetonteile 15 vorgesehen sein, dass im Fertigbetonteil 15 Schläuche oder Heizdrähte oder dergleichen verlegt sind, wobei insbesondere die Schläuche oder Heizdrähte nahe der unteren Kontaktfläche zum Fundament 11 angeordnet sind, um das Fertigbetonteil 15 zu beheizen. Hierdurch wird im Fertigbetonteil 25 eine entsprechende Heizeinrichtung, beispielsweise in Form von im Fertigbetonteil verlegten wasserdurchströmte bzw. wasserdurchströmbare Heizschläuchen oder Heizdrähten, ausgebildet.

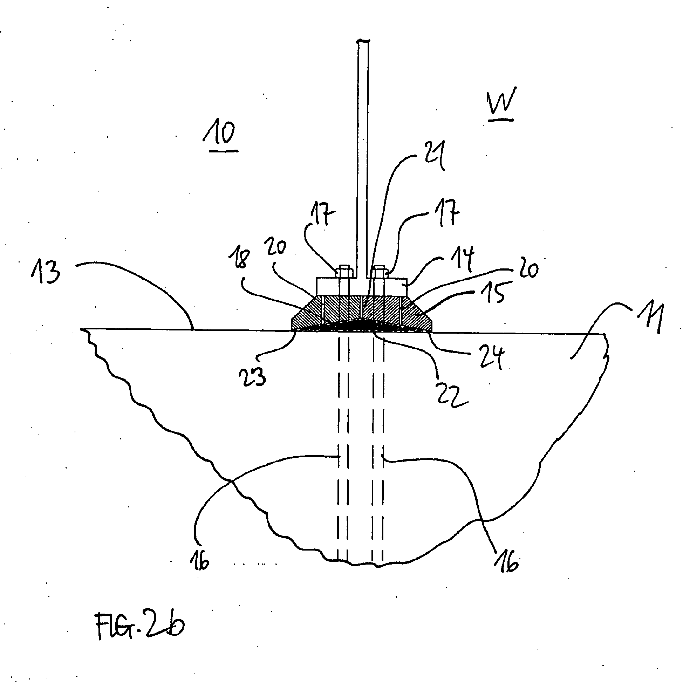

Fig. 2b zeigt die in Fig. 2a dargestellte Detailansicht, wobei über die Bohrungen 20 der Hohlraum 22 nunmehr mit Mörtel oder einer anderen Vergießmasse aufgefüllt ist.

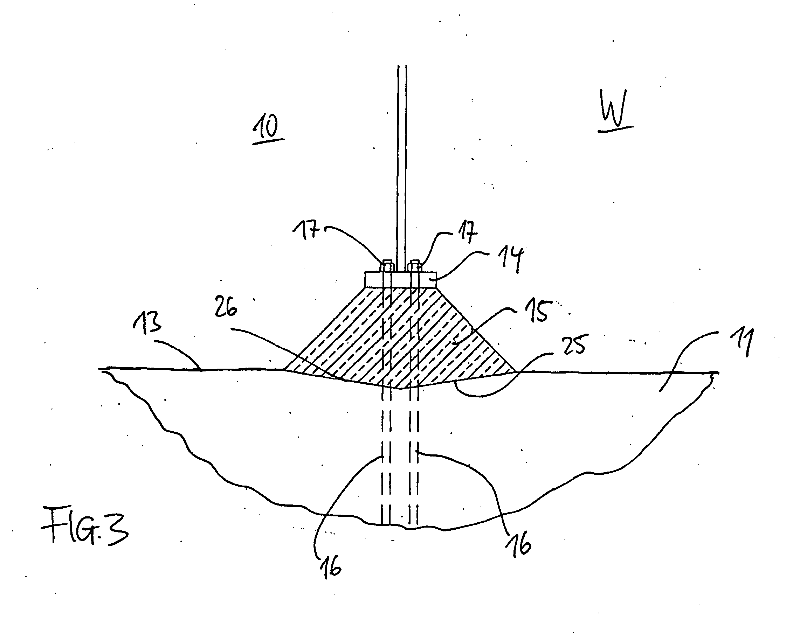

Fig. 3 zeigt eine alternative Ausführungsform eines Fertigbetonteils 15. Das Fertigbetonteil 15 ist im unteren Bereich bzw. an der Unterseite im Querschnitt konusförmig ausgebildet, so dass an der Unterseite abgeschrägte Flächen 25, 26 in einer vorbestimmten Neigung zur Horizontalen eine konische Form bilden. Darüber hinaus ist das Fertigbetonteil 15 von seiner Kontaktseite mit den in einem stumpfen Winkel zueinander angeordneten Flächen 25, 26 an der Unterseite zur oberen Kontaktfläche zum Turmfußflansch 14 nach oben verjüngend, insbesondere konisch ausgebildet. Im Querschnitt weist das Fertigbetonteil 15 polygonale Geometrie auf.

Das Fertigbetonteil 15 aus hochfestem Beton kann sowohl als Kreisringsegment oder auch als gerader Körper verwendet werden, wobei bei der Ausbildung als gerades Fertigbetonteil 15 mehrere Fertigbetonteile zu einem polygonalen Ring auf den Spannankern 15 angeordnet werden. Durch die untere konische Ausbildung des Fertigbetonteils 15 mit geneigt zueinander angeordneten Flächen 25, 26 an der Unterseite wird eine bessere Verdichtung des Betons des Fundaments 11 erreicht. Hierzu werden bei der Errichtung einer Windenergieanlage in einem ersten Schritt die Spannanker 16 teilweise in einem unteren Fundament durch Einbringen von Beton in eine Verschalung angeordnet.

Anschließend werden die Fertigbetonteile 15 auf den Spannankern 16 positioniert, wobei zur Ausjustierung Stellschrauben und/oder Keile oder andere Positionierungsmittel eingesetzt werden. Anschließend wird die Verschalung weiter mit Beton aufgefüllt, bis der in die Verschalung eingebrachte Beton an die Unterseite bzw. an die schräg zueinander angeordneten Flächen 25, 26 angegossen wird. Hierdurch wird eine bessere Verdichtung des Betons des Fundaments erreicht.

Darüber hinaus wird ein kraftschlüssiger Übergang zwischen dem Fertigbetonteil 15 und dem Fundament 11 geschaffen. Nach dem Abbinden des Betons des Fundaments 11 wird anschließend ein unteres Turmsegment mit dem Turmfußflansch 14 auf die Oberseite des Fertigbetonteils 15 aufgesetzt und durch Anziehen der Muttern 17 kraftschlüssig mit dem Fertigbetonteil 15 und dem Fundament 11 verbunden.

Dadurch, dass das Fertigbetonteil 15 an der Unterseite konisch mit den geneigt zueinander angeordneten Flächen 25, 26 bzw. uneben ausgebildet ist, wird bei Einbringen des Betons in diese Schalung die Ausbildung von Lufteinschüssen verhindert.

Insbesondere entfällt bei dieser Ausführungsform der oben geschilderte zusätzliche Arbeitsschritt der Verfüllung des Hohlraums zwischen Fertigbetonteil und Fundament beispielsweise mit einer speziellen Vergussmasse z.B. Pagel^{®}-Beton.

Die in Fig. 2a, 2b und 3 gezeigten Ausführungsformen eines Verbindungskörpers in Form eines Fertigbetonteils 15 zwischen dem Turmfußflansch 14 und dem fertigen oder angegossenen Fundament 11 sind nach unten hin im Durchmesser verbreitert, wodurch eine größere Kontaktfläche des Fertigbetonteils 15 zum Fundament 11 als zum Turmflansch 14 ausgebildet ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen.

### Bezugszeichenliste

- 10: Turm
- 11: Fundament
- 12: Ankerkorb
- 13: plane Fläche
- 14: Turmfußflansch
- 15: Fertigbetonteil
- 16: Spannanker
- 17: Mutter
- 18: konkave Mulde
- 20: Bohrung
- 21: Bohrung
- 22: Hohlraum
- 23: Dichtung
- 24: Dichtung
- W: Windenergieanlage

## Patentansprüche

1. Verbindungskörper (15) einer Windenergieanlage (W), der zwischen der Unterseite eines Turms (10) einer Windenergieanlage (W) und einem Fundamentkörper (11) oder der zwischen der Unterseite eines Turms (10) einer Windenergieanlage (W) und einem Betonturm, insbesondere Stahlbetonturm, angeordnet ist oder wird oder anordbar ist, wobei der Verbindungskörper (15) in Form eines Fertigbetonteils (15) mit einer oberen Kontaktfläche zum Turm (10) und einer unteren Kontaktfläche zum Fundamentkörper (11) oder zum Betonturm ausgeführt ist, wobei die untere Kontaktfläche des Verbindungskörpers (15) zum Fundamentkörper (11) oder die untere Kontaktfläche des Verbindungskörpers (15) zum Betonturm größer ist als die obere Kontaktfläche des Verbindungskörpers (15) zum Turm (10).

2. Verbindungskörper (15) nach Anspruch 1, **dadurch gekennzeichnet, dass** der Verbindungskörper (15) von der Unterseite zur Oberseite verjüngend ausgebildet ist.

3. Verbindungskörper (15) nach Anspruch 1 oder 2, **dadurch gekennzeichnet, dass** der Verbindungskörper (15) an der dem Fundamentkörper (11) oder dem Betonturm zugewandten Unterseite uneben ausgebildet ist.

4. Verbindungskörper (15) nach einem der Ansprüche 1 bis 3, **dadurch gekennzeichnet, dass** die Unterseite des Verbindungskörpers (15) in Bezug auf die Horizontale mit einer vorbestimmten Neigung ungleich 0° (Null Grad), insbesondere bei Anordnung auf dem Fundamentkörper (11) oder bei Anordnung auf dem Betonturm, ausgebildet ist oder dass die dem Fundamentkörper (11) oder die dem Betonturm zugewandte Unterseite des Verbindungskörpers (15) nach unten verjüngend, insbesondere konisch, ausgebildet ist.

5. Verbindungskörper (15) nach einem der Ansprüche 1 bis 4, **dadurch gekennzeichnet, dass** der Verbindungskörper (15) an der Unterseite eine Ausnehmung (18) zur Ausbildung eines Zwischenraums oder Hohlraums (22) aufweist, wobei insbesondere die Ausnehmung (18) gewölbeförmig und/oder konkav ausgebildet ist.

6. Verbindungskörper (15) nach Anspruch 5, **dadurch gekennzeichnet, dass** der Verbindungskörper (15) wenigstens eine Bohrung (20, 21) aufweist, so dass der Hohlraum (22) oder der Zwischenraum mit der Außenseite des Verbindungskörpers (15) in Verbindung steht, wobei vorzugsweise die Ausnehmung (18) nach oben zu den Bohrungen (20, 21) hin verjüngend ausgebildet ist, wobei weiter vorzugsweise durch die wenigstens eine Bohrung (20) eine Vergussmasse in den Hohlraum (22) oder Zwischenraum eingebracht wird oder ist, und/oder weitervorzugsweise wenigstens eine weitere Bohrung (21) vorgesehen ist, so dass der Hohlraum (22) oder der Zwischenraum während des Einbringens der Vergussmasse entlüftet wird.

7. Verbindungskörper (15) nach einem der Ansprüche 1 bis 6, **dadurch gekennzeichnet, dass** an der Unterseite des Verbindungskörpers (15) eine oder mehrere Dichtungen (23, 24) vorgesehen sind und/oder dass eine Dichtung (24) an der außenliegenden Unterseite des Verbindungskörpers (15) und/oder eine Dichtung (23) an der innenliegenden Unterseite des Verbindungskörpers (15) vorgesehen sind.

8. Verbindungskörper (15) nach einem der Ansprüche 1 bis 7, **dadurch gekennzeichnet, dass** der Verbindungskörper (15) als geschlossener, vorzugsweise kreisförmiger oder polygonaler, Ring ausgebildet ist und/oder dass der Verbindungskörper (15) aus mehreren Verbindungskörpersegmenten ausgebildet ist.

9. Verbindungskörper (15) nach einem der Ansprüche 1 bis 8, **dadurch gekennzeichnet, dass** der Verbindungskörper (15) zwischen der Unterseite, insbesondere dem Turmflansch, weiter vorzugsweise dem Stahlflansch, eines Turms (10), insbesondere eines Stahlturms (10), einer Windenergieanlage (W) und dem Fundamentkörper (11) oder dem Betonturm, insbesondere Stahlbetonturm, angeordnet ist oder wird oder anordbar ist und/oder dass der Verbindungskörper (15) bei Anordnung auf dem Fundamentkörper (11) oder auf dem Betonturm mittels Spannelementen, insbesondere von Spannankern, vorgespannt wird oder ist.

10. Verwendung eines Verbindungskörpers (15) zur Errichtung eines Turms (10) einer Windenergieanlage (W), wobei der Verbindungskörper (15) nach einem der Ansprüche 1 bis 9 ausgebildet ist.

11. Verfahren zum Errichten eines Turms (10) einer Windenergieanlage (W), mit den folgenden Schritten:
- Anordnung eines Verbindungskörpers (15) nach einem der Ansprüche 1 bis 9 auf einem Fundamentkörper (11) oder auf einem Betonturm, insbesondere Stahlbetonturm, wobei
- in einem weiteren nachfolgenden Schritt ein Turm (10) einer Windenergieanlage auf dem Verbindungskörper (15) angeordnet wird,
wobei insbesondere bei Anordnung eines Verbindungskörpers (15) auf einem Fundamentkörper (11) oder auf einem Betonturm zwischen der Unterseite des Verbindungskörpers (15) und dem Fundamentkörper (11) oder dem Betonturm ein Hohlraum (22) ausgebildet wird und in einem nachfolgenden Schritt eine Vergussmasse in den Hohlraum (22) eingebracht wird, wobei insbesondere vor Einbringen der Vergussmasse der Verbindungskörper (15), insbesondere durch Justierung von auf Verankerungselementen vorgesehenen Justierungselementen, ausgerichtet wird, wobei weiter insbesondere das Einbringen von Vergussmasse durch wenigstens ein oder mehrere Löcher (20, 21) des Verbindungskörpers (15) erfolgt.

12. Verfahren zum Errichten eines Turms (10) einer Windenergieanlage (W), mit den folgenden Schritten:
- Anordnung und/oder Ausrichtung von Verankerungselementen an einem Errichtungsort einer Windenergieanlage (W)
- Anordnung und/oder Positionierung, insbesondere Justage, wenigstens eines oder mehrerer Verbindungskörper auf oder an Verankerungselementen und
- Gießen eines Fundamentkörpers zu einem vollständigen Fundamentkörper, wobei der die Gießmasse des Fundamentkörpers, insbesondere Beton, wenigstens bis an die Unterseite des oder der Verbindungskörper angegossen wird, wobei
in einem weiteren nachfolgenden Schritt ein Turm (10) einer Windenergieanlage auf dem oder den Verbindungskörpern (15) angeordnet wird,
wobei insbesondere nach Anordnung und/oder Ausrichtung von Verankerungselementen an einem Errichtungsort einer Windenenergieanlage (W) ein erster, unterer Teil des Fundamentkörpers hergestellt, insbesondere gegossen, wird, so dass die Verankerungselemente teilweise im teilweise ausgebildeten Fundamentkörper angeordnet sind, und nach Anordnung und/oder Positionierung, insbesondere Justage, wenigstens eines oder mehrerer Verbindungskörper auf oder an Verankerungselementen ein weiterer Teil des Fundamentkörpers zu einem vollständigen Fundamentkörper ausgebildet, insbesondere gegossen, wird.

13. Kombination eines Verbindungskörpers (15) einer Windenergieanlage (W), der zwischen der Unterseite eines Turms (10) einer Windenergieanlage (W) mit einem Fundamentkörper (11) oder mit einem Betonturm, insbesondere Stahlbetonturm, auf dem oder auf denen der Verbindungskörper (15) angeordnet ist oder wird oder anordbar ist, und/oder mit einem Turm (10), wobei der Verbindungskörper (15) nach einem der Ansprüche 1 bis 9 ausgebildet ist.

14. Windenergieanlage (W) mit einem Turm (10) und mit einem Verbindungskörper (15) nach einem der Ansprüche 1 bis 9 oder mit einer Kombination eines Verbindungskörpers (15) nach Anspruch 13.

## Claims

1. A connecting body (15) of a wind turbine system (W), which is arranged or arrangable between the underside of a tower (10) of a wind turbine system (W) and a foundation body (11) or between the underside of a tower (10) of a wind turbine system (W) and a concrete tower, particularly a reinforced concrete tower, wherein the connecting body (15) is constructed in the form of a prefabricated concrete component with an upper contact surface to the tower (10) and a lower contact surface to the foundation body (11) or to the concrete tower, wherein the lower contact surface of the connecting body (15) to the foundation body (11) or the lower contact surface of the connecting body (15) to the concrete tower is larger than the upper contact surface of the connecting body (15) to the tower (10).

2. A connecting body (15) as claimed in claim 1, **characterised in that** the connecting body (15) tapers from the underside to the upper side.

3. A connecting body (15) as claimed in claim 1 or 2, **characterised in that** the connecting body (15) is of uneven construction on the underside directed towards the foundation body (1) or towards the concrete tower.

4. A connecting body (15) as claimed in one of claims 1 to 3, **characterised in that** the underside of the connecting body (15) is constructed with a predetermined inclination which is not equal to 0° (zero degrees) with respect to the horizontal, particularly when arranged on the foundation body (11) or when arranged on the concrete tower or that the underside of the connecting body (15) directed towards the foundation body (11) or the underside of the connecting body (11) directed towards the concrete tower is tapered, particularly conically, in the downward direction.

5. A connecting body (15) as claimed in one of claims 1 to 4, **characterised in that** the connecting body (15) has a recess (18) on the underside for defining a gap or cavity (22), wherein, in particular, the recess (18) is of dome-shaped and/or concave construction.

6. A connecting body (15) as claimed in claim 5, **characterised in that** the connecting body (15) has at least one bore (20, 21) so that the cavity (22) or the gap is in communication with the outer surface of the connecting body (15), whereby, preferably, the recess (15) is upwardly tapered towards the bores (20, 21), wherein, further preferably, a potting composition is introduced through the at least one bore (20) into the cavity (22) or gap, and/or, further preferably, at least one further bore (21) is provided so that the cavity (22) or the gap is vented during the introduction of the potting composition.

7. A connecting body (15) as claimed in one of claims 1 to 6, **characterised in that** provided on the underside of the connecting body (15) there are one or more seals (23, 24) and/or that a seal (24) is provided on the external underside of the connecting body (15) and/or a seal (23) is provided on the internal underside of the connecting body (15).

8. A connecting body (15) as claimed in one of claims 1 to 7, **characterised in that** the connecting body (15) is constructed in the form of a closed, preferably circular or polygonal ring, and/or that the connecting body (15) is formed from a plurality of connecting body segments.

9. A connecting body (15) as claimed in one of claims 1 to 8, **characterised in that** the connecting body (15) is arranged or arrangable between the underside, particularly the tower flange, further preferably the steel flange, of a tower (10), particularly a steel tower (10) of a wind turbine system (W) and the foundation body (11) or the concrete tower, particularly reinforced concrete tower, and/or that the connecting body (15) is clamped by means of clamping elements, particularly anchors, when arranged on the foundation body (11) or on the concrete tower.

10. Use of a connecting body (15) for erecting a tower (10) of a wind turbine system W), wherein the connecting body (15) is constructed in accordance of claims 1 to 9.

11. A method of erecting a tower (10) of a wind turbine system (W) with the following steps:
- arranging a connecting body (15) as claimed in one of claims 1 to 9 on a foundation body (11) or on a concrete tower, particularly a reinforced concrete tower, wherein
- in a further, subsequent step a tower (10) of a wind turbine system is arranged on the connecting body (15),
wherein in particular, when arranging a connecting body (15) on a foundation body (11) or on a concrete tower between the underside of the connecting body (15) and the foundation body (11) or the concrete tower, a cavity (22) is formed and in a subsequent step a potting composition is introduced into the cavity (22), wherein, particularly before introducing the potting composition, the connecting body is adjusted, particularly by adjusting elements provided on anchoring elements, wherein, further, in particular, the introduction of potting composition is effected at least one or more holes (20, 21) in the connecting body (15).

12. A method of erecting a tower (10) of a wind turbine system (W) with the following steps:
- arrangement and/or alignment of anchoring elements at an erection site of a wind turbine system (W),
- arrangement and/or positioning, particularly adjustment, of at least one or more connecting bodies at or on anchoring elements and,
- casting a foundation body to form a complete foundation body, wherein the pouring composition of the foundation body, particularly concrete, is poured to at least the underside of the connecting body or bodies, wherein
in a further, subsequent step a tower (10) of a wind turbine system is arranged on the connecting body or bodies (15),
wherein particularly after arranging and/or aligning anchoring elements at an erection site of a wind turbine installation (W), a first lower portion of the foundation body is produced, particularly cast, so that the anchoring elements are partially arranged in the partially formed foundation body, and after arrangement and/or positioning, particularly adjustment, of one or more connecting bodies on or at anchoring elements, a further portion of the foundation body is formed, particularly cast, to make a complete foundation body.

13. Combination of a connecting body (15) of a wind turbine system (W), which is arrangable between the underside of a tower (10) of a wind turbine system (W) with a foundation body (11) or with a concrete tower, particularly a reinforced concrete tower, on which the connecting body (15) is arranged, and/or with a tower (10), wherein the connecting body (15) is constructed in accordance with one of claims 1 to 9.

14. A wind turbine system (W) with a tower (10) and with a connecting body (15) as claimed in one of claims 1 to 9 or with a combination of a connecting body (15) as claimed in claim 13.

## Revendications

1. Dispositif d'ancrage (15) pour une éolienne (W), agencé ou qui peut être agencé entre un pilier (10) d'une éolienne (W) et une base (11), ou entre le pilier (10) d'une éolienne (W) et une surface en béton, en particulier une surface en béton armé, le dispositif d'ancrage (15) étant sous la forme d'une pièce en béton préfabriqué (15) ayant une surface supérieure en contact avec le pilier (10) et une surface inférieure en contact avec la base (11) ou avec la surface en béton, et la surface de contact entre la partie inférieure du dispositif d'ancrage (15) et la base (11) ou la surface de contact inférieure du dispositif d'ancrage (15) étant plus grande que la surface de contact entre la partie supérieure du dispositif d'ancrage (15) et le pilier (10).

2. Dispositif d'ancrage (15) selon la revendication 1, **caractérisé en ce que** le dispositif d'ancrage (15) est effilé du bas vers le haut.

3. Dispositif d'ancrage (15) selon la revendication 1 ou la revendication 2, **caractérisé en ce que** le dispositif d'ancrage (15) est fixé à la base (11) et **en ce que** le côté tourné vers la surface est formée de manière inégale.

4. Dispositif d'ancrage (15) selon l'une quelconque des revendications 1 à 3, **caractérisé en ce que** la face inférieure du dispositif d'ancrage (15), possède une inclinaison prédéterminée égale à 0° (zéro degré) par rapport à l'horizontale, en particulier pour le montage du dispositif sur la base (11) ou l'assemblage du dispositif et du pilier, de manière à ce que le dispositif d'ancrage (15) qui est effilé du bas vers le haut, forme un cône.

5. Dispositif d'ancrage (15) selon l'une quelconque des revendications 1 à 4, **caractérisé en ce que** le dispositif d'ancrage (15) sur sa face inférieure présente un évidement (18) pour former un espace ou une cavité (22), l'évidement (18) étant en forme de voûte et/ou concave.

6. Dispositif d'ancrage (15) selon la revendication 5, **caractérisé en ce que** le dispositif d'ancrage (15) comprend au moins un alésage (20, 21), de sorte que la cavité (22) soit reliée avec le côté extérieur du dispositif d'ancrage (15), de préférence, l'évidement (18) rétrécit jusqu'à l'alésage (20, 21), un composé d'étanchéité étant introduit dans la cavité (22) par au moins un alésage (20) selon un mode de réalisation préféré et/ou plus préférablement, au moins un autre alésage (21) est prévu de sorte que la cavité (22) soit aérée pendant l'introduction de la masse de scellement.

7. Dispositif d'ancrage (15) selon l'une quelconque des revendications 1 à 6, **caractérisé en ce que** plusieurs joints d'étanchéité (23, 24) sont prévus sur la face inférieure du dispositif d'ancrage (15), et/ou **en ce qu'**il est prévu un joint (24) sur la surface inférieure externe du dispositif d'ancrage (15) et/ou **en ce qu'**il est prévu un joint d'étanchéité (23) sur la surface inférieure intérieure du dispositif d'ancrage (15).

8. Dispositif d'ancrage (15) selon l'une quelconque des revendications 1 à 7, **caractérisé en ce que** le dispositif d'ancrage (15) est sous la forme d'un anneau fermé, de préférence circulaire ou polygonal, et/ou **en ce que** le dispositif d'ancrage (15) est formé par une pluralité d'éléments d'ancrage.

9. Dispositif d'ancrage (15) selon l'une quelconque des revendications 1 à 8, **caractérisé en ce que** le dispositif d'ancrage (15) agencé ou peut être agencé entre la partie inférieure, en particulier entre l'embout du pilier (10), qui est, selon un mode de réalisation préféré, en acier, en particulier pour un pilier en acier (10) d'une éolienne (W), et entre la base (11) ou une surface en béton, en particulier une surface en béton armé, et/ou **en ce que** le dispositif d'ancrage (15), lorsqu'il est agencé sur la base (11) ou sur une surface en béton, est précontraint au moyen d'éléments de serrage, en particulier au moyen de tirants.

10. Utilisation d'un dispositif d'ancrage (15) pour la construction d'un pilier (10) pour une éolienne (W), dans lequel le dispositif d'ancrage (15) est conçu selon l'une des revendications 1 à 9.

11. Procédé de construction d'un pilier (10) pour une éolienne (W), comprenant les étapes consistant à :
- agencer un dispositif d'ancrage (15) selon l'une des revendications 1 à 9 sur une base (11) ou sur une surface en béton, en particulier une surface en béton armé, et
- disposer, au cours d'une étape ultérieure, un pilier (10) d'une éolienne sur le dispositif de raccordement, en particulier en agençant un dispositif d'ancrage (15) sur une base (11) ou sur une surface en béton, de manière à ce qu'entre le fond du dispositif d'ancrage (15) et la base (11) ou la surface en béton, se forme une cavité (22), dans laquelle est introduit une masse de scellement lors d'une étape ultérieure, notamment avant l'introduction du dispositif d'ancrage (15) qui est aligné par l'ajustement des éléments d'ancrages, et plus particulièrement, le dispositif d'ancrage est ajusté par un moulage comprenant un ou plusieurs alésages (20, 21).

12. Procédé de construction d'un pilier (10) pour une éolienne (W), comprenant les étapes consistant à :
- agencer l'orientation de l'ancrage des éléments sur un site de construction d'une éolienne (W)
- assembler et/ou positionner, en particulier ajuster, au moins un corps d'ancrage ou un élément d'ancrage, et
- mouler une base pour former une base complète de manière à ce que la base, en particulier du béton, soit coulée au moins jusqu'à la face inférieure du corps ou du composé, dans lequel, dans une autre étape ultérieure, un pilier (10) d'une éolienne est disposé sur au moins un dispositif d'ancrage (15) et/ou est aligné par les éléments d'ancrage sur un site de construction d'une éolienne (W), la disposition des éléments d'ancrage formant partiellement la base, de même que les éléments de connexion disposés sur ou dans les éléments d'ancrage, l'autre partie destinée à former une base complète étant moulée.

13. Combinaison d'un dispositif d'ancrage (15) et d'une éolienne (W) formée entre la partie inférieure d'un pilier (10) d'une éolienne (W) et une base (11) ou une surface en béton, en particulier une surface en béton armé, et sur laquelle le dispositif d'ancrage (15) est agencé ou peut être agencé sur un pilier (10), combinaison dans laquelle le dispositif d'ancrage (15) est conçu selon l'une quelconque des revendications 1 à 9.

14. Installation d'une éolienne (W), avec un pilier (10) et un dispositif d'ancrage (15) selon l'un quelconque des revendications 1 à 9 ou avec une combinaison d'un dispositif d'ancrage (15) selon la revendication 13.
